# EUROPEAN PATENT SPECIFICATION

(11) **EP 3 578 437 B1**
(45) Date of publication and mention of the grant of the patent: **05.07.2023**
(21) Application number: 19177324.1
(22) Date of filing: 29.05.2019
(51) Int. Cl.: B62B 3/00

(54) **A TROLLEY FOR TRANSPORTING DAIRY PRODUCTS**
WAGEN ZUM TRANSPORT VON MILCHPRODUKTEN
CHARIOT DE TRANSPORT DE PRODUITS LAITIERS

(30) Priority: 01.06.2018 DK PA201870320
(43) Date of publication of application: 11.12.2019
(73) Proprietor: Arla Foods amba, 8260 Viby J (DK)
(72) Inventor: Smith, Robin, Heybridge, Maldon Essex CM9 4YT (GB)
(74) Representative: Plougmann Vingtoft a/s

(56) References cited:
- EP-A1- 0 270 754
- EP-A2- 2 327 602
- JP-U- S56 101 910
- US-A- 3 152 698
- US-A1- 2002 092 132
- US-A1- 2012 248 957

## Description

### FIELD OF THE INVENTION

The present invention relates to a trolley for transport of dairy products in trolleys from the package facilities to the consumer markets. The invention also relates to a corresponding method. Such a trolley is known from US3152698A.

### BACKGROUND OF THE INVENTION

When using trolleys for transport of dairy products, certain challenges present themselves. If a customer orders less than a full layer of e.g. milk, the bottles are not stable and can fall out of the trolley, causing waste. Trolleys are available in various standard sizes for dairy transport to grocery retailers, e.g. suitable for milk packages or bottles.

When transporting cream cases alongside other dairy products loaded into trolleys, the cream cases are very fragile and prone to be damaged upon delivery. In dairy transport there is an increase in customers ordering shrink wrapped milk cases, which, protects the milk but reduces the percentage of filling of trolleys used in said transport.

When using trolleys for transport some products are not suitable for stacking in the trolley alongside traditional dairy products and there is an apparent need for a more flexible product.

Hence, an improved trolley for dairy transport would be advantageous, and in particular a more efficient and/or reliable trolley would be advantageous.

### OBJECT OF THE INVENTION

It is a further object of the present invention to provide an alternative to the prior art.

In particular, it may be seen as an object of the present invention to provide a trolley for dairy transport that solves the above mentioned problems of the prior art with transport capacity and/or flexible packaging.

### SUMMARY OF THE INVENTION

Thus, the above described object and several other objects are intended to be obtained in a first aspect of the invention by providing a trolley for distributing dairy products comprising, the features of claim 1.

The invention is particularly, but not exclusively, advantageous for obtaining a reduced carbon footprint, by increasing the vehicle for dairy transport fill with up to 20%, thereby reducing the need of transport by a minimum of 2% in the context of dairy applications. Furthermore the ability to secure a container to the top of the dairy trolley would decrease the need of packaging used for transport of e.g. cream, potentially saving 22 million *one trip* plastic trays from the applicant's supply chain annually. This would enable the customers in the store to identify and access for example cream products in the container easier than currently. This would also enable other chilled products to be delivered direct to a store alongside the fresh dairy delivery in the trolley.

Preferably, the invention is advantageous for use in logistics within the area of dairy products, i.e. establishment for the sale or distribution chiefly of milk and milk products. The invention according to the first aspect is also applicable for logistical purposes other than non-dairy applications, where a trolley or similar device is used, as the skilled person would readily understand once the general teaching and principle of the invention is fully understood.

In the context of the present invention, a trolley is understood to mean a cart or wheeled stand used for conveying something (such as food, especially dairy products like milk, yoghurt, cream, cheese etc.). The trolley will normally have a plurality of casters, typically four, e.g. one caster in each corner, but any of a set of wheels or rotating balls mounted in a swivel frame and used for the support and movement of furniture, trucks, and portable equipment are applicable within the context of the present invention. Typically, a trolley has struts for forming a supporting structure, i.e. the struts may be understood as structural pieces designed e.g. to resist pressure in the direction of its length.

In the context of the present invention, a bracket may be understood to include an overhanging member that projects from a structure (such as a wall or side of a trolley) and is usually designed to support a vertical load, and/or to strengthen an angle in a structure. Correspondingly, the term 'protrude' may, in the context of the present invention, be understood as an element jutting or sticking out to enable support as the skilled person in logistics will readily understand once the general principle and teaching of the present invention is comprehended. The extent of protrusion for each adapter bracket may be at least 2%, 3%, 4%, 5%, 10%, 15% or higher of the width between the parallel struts to ensure sufficient support from below. Though, in the context of the present invention, the securing base protrudes inwards to a centre (geometrical or centre of mass) of the trolley to support the container.

Similarly, a container may include a receptacle, such as a box or jar for holding goods, particularly dairy products. The container may additionally have a lid or a top cover. The use of an adapter may be interpreted to include an attachment for adapting an apparatus for uses not originally intended, e.g. a trolley being adapted for securing a container like in the present invention. Thus, the term 'secure' is normally interpreted to mean make fast, anchor, catch, clamp, fasten, and/or hitch as the skilled person in logistics will readily understand once the general principle and teaching of the present invention is comprehended. Typical containers may have a length of 30-70 cm and a width of 20-50 cm, some preferred examples being containers of the so-called 'Maxinest' type from Schoeller Allibert, NL, e.g. with external dimensions being length 60 cm, width 40 cm, and height 25.3 cm, or the 'half' Maxinest with external dimensions being length 40 cm, width 30 cm, and height 13.5 cm, though many other containers are useful within the context of the present invention, preferably containers for food products, more preferably dairy products.

In the context of the present invention, the term 'engage' may include that the elements engaging each other may touch each other, but not necessarily all the time. Thus, during transport the skilled person will readily understand that the elements engaging each other may, in some situations, not continuously touch each other during transport, but engage periodically, i.e. touch at one time and not touch at a later time as a result of the moving, shaking, vibrations, etc.

In some situations, for example a second surface may touch at least one side of the container but because of sliding during transport, the opposite second surface may not touch the container for a period of time. Both of the second surfaces may still be understood to engage in the sense of the present invention, especially because such an understanding of engaging will still perform the function to fixate the associated container in a direction during transport. Thereby the second surfaces mitigate or reduce undesired movement of the container during transport.

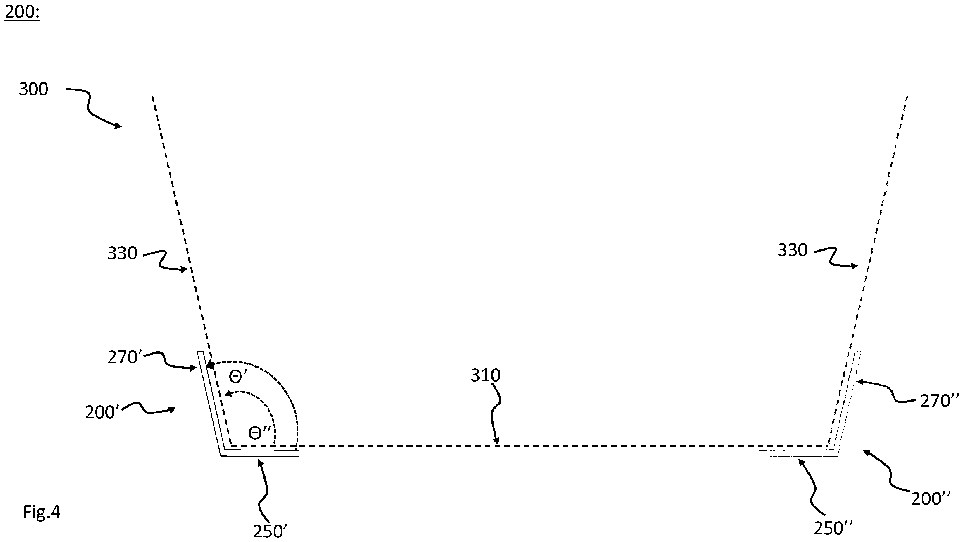

In an advantageous embodiment of the invention, the pair of first surfaces on each side of the trolley may supports the bottom surface of the associated container from below so that the width of the container bridging between the two parallel struts is smaller than the distance between said struts at the upper portion of the trolley, and thereby allowing a flexible transport of containers on top of trolley, especially within the dairy industry. It is to understood that the container is bridging the gap between the first surfaces in the sense that bottom surface resembles a bridge between the first surfaces, the bottom surface thereby having a free portion not touching or being supported by the first surfaces, cf. Figure 4 and description thereof further below.

In one embodiment of the invention, the trolley will be of a standard size in a given region or area and/or for a specific operator of the transportation using the trolleys, and the containers will be of various size and dimensions. It is therefore contemplated that adapter brackets of various sizes and dimensions corresponding to these containers will improve flexibility.

The embodiment is particularly, but not exclusively, advantageous for that the invention can be carried out in any region or area no matter what trolley or container size or shape the given area or operator uses as standard, thereby improving the flexibility greatly.

Furthermore, the embodiment is particularly, but not exclusively, advantageous for that the content of the containers can have a high degree of variation, as the brackets allow the containers to vary in size and the possible variation of container size allows the potential content of the container to vary, thereby improving the flexibility greatly.

In one embodiment, the pair of adapter brackets may secure two associated containers by supporting each container by the pair of first surfaces from below, and securing each container by the pair of second surfaces. The two containers may have an approximately half size compared to an embodiment where only a single container is secured at top of the trolley. Correspondingly, any higher number of containers, i.e. three, four, five, etc., could be secured by the adapter brackets, if their combined size fits onto the top of trolley.

In another embodiment, two, or more, pairs of adapter brackets may be applied on two upper portions of the trolley, i.e. so that one side has two, or more, adapter brackets and the opposing side of the trolley has a corresponding number of adapter brackets, which advantageously makes it possible to have for example two associated containers side by side.

The embodiment is particularly, but not exclusively, advantageous in that the content of the containers can have a high degree of variation, as some potential content in the containers can have different requirement for packaging. Content that might require smaller containers can thereby also be allowed, as a number of smaller containers also can be secured on the top of the trolley.

In an embodiment of the invention, an angle between the first and the second surface, and an angle between the bottom surface and the corresponding sides of the container, respectively, are related so as to enable mechanical interlocking between the second surfaces and the adjacent sides of the container between said surfaces and prevent substantial movement between the pair of brackets and the container when transporting goods, e.g. dairy. Often, when using similar containers from various manufacturers, sizes may vary and the angle between said surfaces ensure a better fit, relative to e.g. two adjacent perpendicular surfaces. In this context, the term interlocking is to be understood as connecting so that the motion or operation of any part is constrained by another.

In an improved embodiment of the invention, an angle between the first and the second surface is larger than an angle between the bottom surface and the corresponding sides of the container, respectively, creating two tapered elements, in which the second surfaces may be the exterior portion and the containers sides may be the interior portion, so as to guide the containers bottom surface onto the two first surfaces

The embodiment is particularly, but not exclusively, advantageous for reducing time spent on correct placement of the container on the pair of brackets and a reduction of incorrectly placed containers, which may prevent spillage or broken goods, e.g. dairy products.

In an embodiment of the invention, the first surface is manufactured in a material having a friction surface relative to the bottom surface of the associated container so as to prevent sliding of said container during transport. It is contemplated that a friction layer may reduce the need for a third surface mentioned above, which may improve flexibility of the pair of adapter brackets, by for example increasing the size of containers being secured or fitted onto the trolley, in between the second surfaces of the pair of brackets, and thereby not limiting this dimension of the container. Alternatively or additionally, the first surface of the securing base may have a textured surface relative to the bottom surface of the associated container as to prevent sliding of said container during transport.

In an improved embodiment of the invention, the friction surface relative to the bottom surface of the associated container is made as grooves having a direction across the longitudinal direction of the first surface of the brackets, the direction of the grooves being perpendicular to said longitudinal direction, or the direction of the grooves being parallel to said longitudinal direction, or at an angle there between. The format of the grooves being made so as they fit with grooves underneath the bottom of the associated container, thereby making the engagement between the adapter brackets and the associated container more reliable and preventing the container to slide or move in any direction.

In an advantageous embodiment, the frame mount may comprise a mechanical locking mechanism for further securing the adapter bracket thereby increasing stability during transport. Particularly, the mechanical locking mechanism may comprise a snap lock mechanism for engaging with said strut in the upper portion of the trolley enabling easy click-on click-off use of the adapter brackets in the supply chain. In this context, a snap lock may be understood to include, but not limited to, a lock shutting with a catch or snap. Other alternatives readily applicable within the teaching and principle of the present invention include ropes, reusable straps and ties, e.g. Velcro-based straps ^{®}, strings, any kind of tie, such as cable tie, zip tie, nylon tie, etc. More permanent embodiments may include screws, bolts, pins, adhesive/glue, etc. for mounting the adapter brackets to the top of the trolley.

In some embodiments, the sides of the associated container may be arranged in a camber angle defining a smaller area at the bottom surface of the sides compared to a top portion of the sides thereby so as to guide the container's bottom surface onto the two first surfaces, thereby reducing time spent on correct placement of the container on the pair of brackets and a reduction of incorrectly placed containers, which may prevent spillage or broken goods, e.g. dairy products.

In an embodiments of the invention, the sides of the associated container may be arranged in a right angle defining an area at the bottom surface of the sides being the same area as compared to a top portion of the sides.

In an embodiment of the invention, the strengthening support of the adapter bracket may have cut-outs, so as the strengthening support has notches or indentations. This embodiment is particularly, but not exclusively, advantageous for that the cut-out of the strengthening support allows the trolleys to be nested with the brackets mounted on in an efficient way, when the trolleys are transported without goods.

In other embodiments, the adapter bracket may be manufactured at least partly in a polymer, preferably HDPE, for improved weight to strength ratio.

In another improved embodiment, the adapter bracket may be coated and/or manufactured in, or with, an anti-bacterial surface, especially for food applications. Thus, for example metallic surface or additives like Silver may be applied in the context of the present invention. Other alternatives include fluorocarbons, such as PTFE or Teflon ^{®}. Yet in another alternative, it is contemplated that the surface of the adapter brackets may be modified be mechanical means to have an anti-bacterial surface.

In a second aspect, the present invention relates to a pair of adapter brackets for securing an associated container to the top of an associated trolley according to claim 1,

Thus, the adapter brackets can be easily, quickly and efficiently fixed to and or removed from the top of the trolley. Once in place they provide a support for an additional container to be carried or secure to a top of the trolley. In one advantageous embodiment, the pair of adapter brackets are identical (within manufacturing tolerances) making it easier to have the adapters available along the supply chain.

The invention further relates, in a third aspect, to a method for securing a container to the top of a trolley, comprising the features of claim 13.

The third aspect of the invention is particularly, but not exclusively, advantageous in that the method according to the present invention may be implemented by providing a pair of adapter brackets according to the second aspect at any point of the supply chain where feasible.

The first, second and third aspect of the present invention may each be combined with any of the other aspects. These and other aspects of the invention will be apparent from and elucidated with reference to the embodiments described hereinafter.

### BRIEF DESCRIPTION OF THE FIGURES

The trolley according to the invention will now be described in more detail with regard to the accompanying figures.
Figure 1 shows three different views of the trolley according to the present invention,
Figure 2 similarly shows three different views of the trolley according to the present invention in a closer view,
Figure 3 shows three different views of an adapter bracket for securing a container to a trolley according to the present invention,
Figure 4 is a schematic drawing illustrating two adapter brackets receiving an associated container,
Figure 5 is a front and rear view of an adapter bracket for securing a container to a trolley according to the present invention,
Figure 6 shows two views of a container for being securing to a trolley according to the present invention, and
Figure 7 is a flow-chart of a method according to the invention.

### DETAILED DESCRIPTION OF AN EMBODIMENT

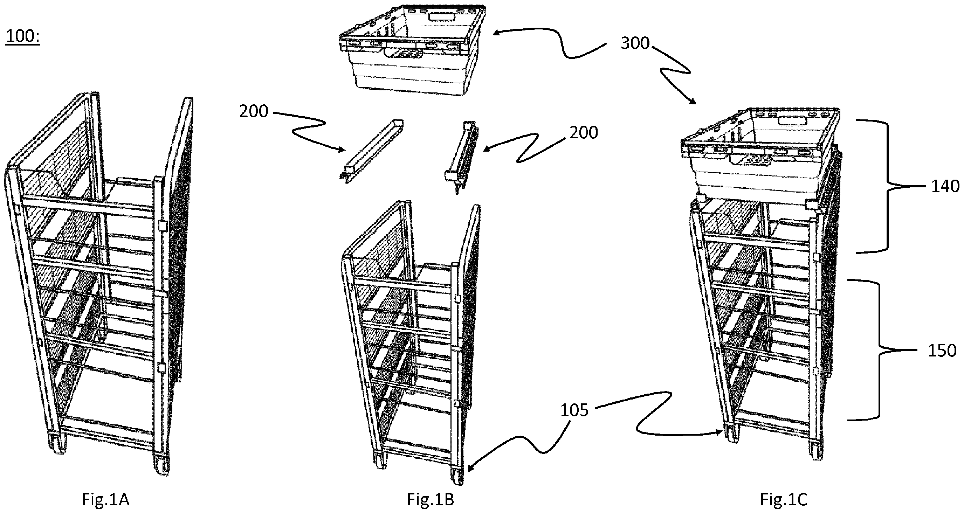

Figure 1 shows three different views of the trolley 100 according to the present invention. Figure 1A shows a trolley 100 without the pair of adapter brackets. Figure 1B shows an exploded view of the trolley 100 with the adapter brackets 200 for securing the container 300 to the trolley. Figure 1C shows an assembled trolley for distributing dairy products with the container on top of the trolley securing by adapter brackets 200 on the upper portion 140 of the trolley. A plurality of casters 105 is mounted to a lower portion 150 of the supporting structure in the trolley, the casters 105 being arranged for rolling displacement of the trolley. Trolleys for dairy products are available in several standards, one example being a trolley with width/height/depth dimensions being 66 cm, 130 cm and 42 cm, respectively, but many other sizes are contemplated within the context of the present invention.

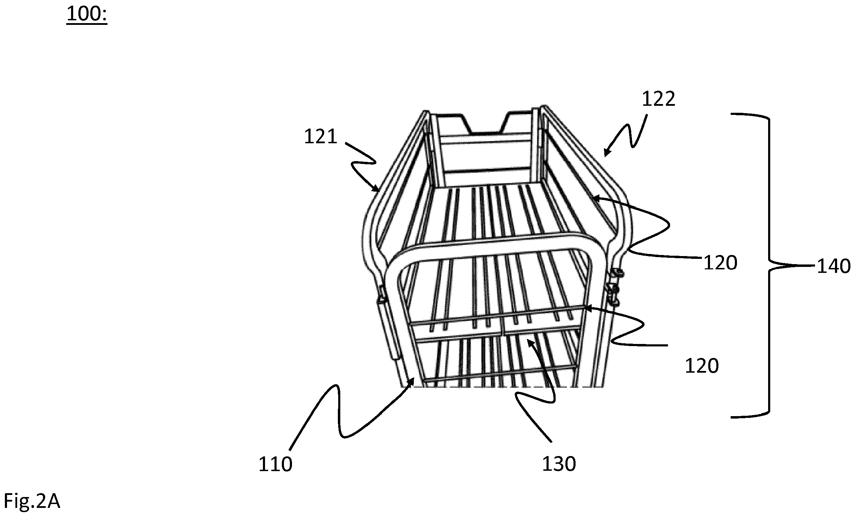

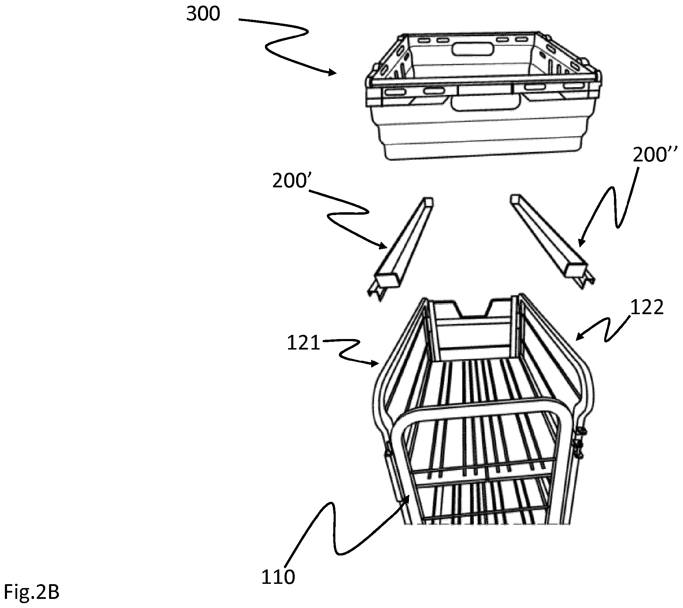

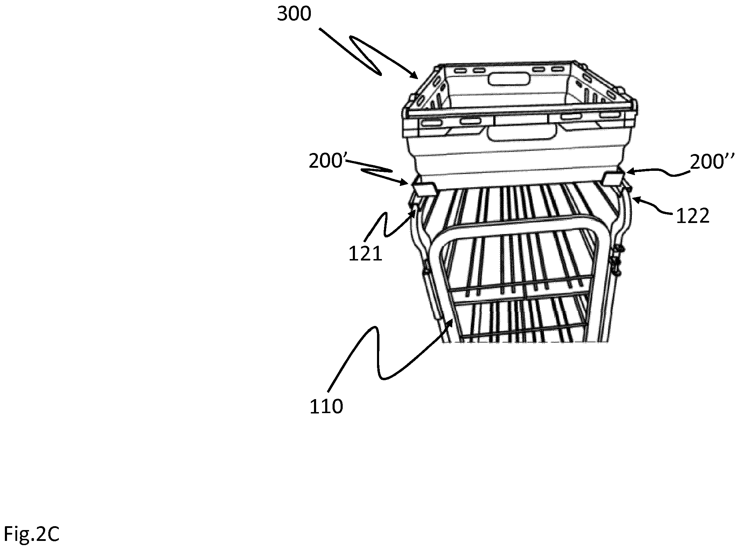

Figure 2 similarly shows three different views of the trolley according to the present invention in a closer view.

Figure 2A shows a trolley 100 for distributing dairy products. The trolley 100 has a supporting structure 110 including a plurality of struts 120 interconnected as to provide a frame or construction with four sides and an upper portion 140 and a lower portion 150 as shown in Figure 1C. The upper portion 140 comprises two substantially parallel struts 121 and 122, preferably oriented horizontally during transport and normal use. The distance between the parallel struts could be around 10-90 cm, preferably around 20 - 80 cm, more preferably around 30-70 cm. The structure 110 has one, or more, surfaces 130, preferably oriented horizontally, within the supporting structure for storage of said dairy products (not shown). Dairy products may be in single bottles of various sizes, bottles wrapped together using plastic film as secondary packaging (shrink wrapped). Other shapes are single pots of cream or yogurt of various sizes, pots of cream or yogurt packaged together using secondary packaging trays or plastic film. Yet other shapes may be packs of butter and cheese, either singly or in secondary packaging (usually cardboard boxes). Other portion-sized, or pack-sizes, of dairy products are packed in single, or accumulated in secondary packing of cardboard, plastic or film. These can all be carried in the container using the adapter brackets thereby increasing the load fill and/or load security of the container.

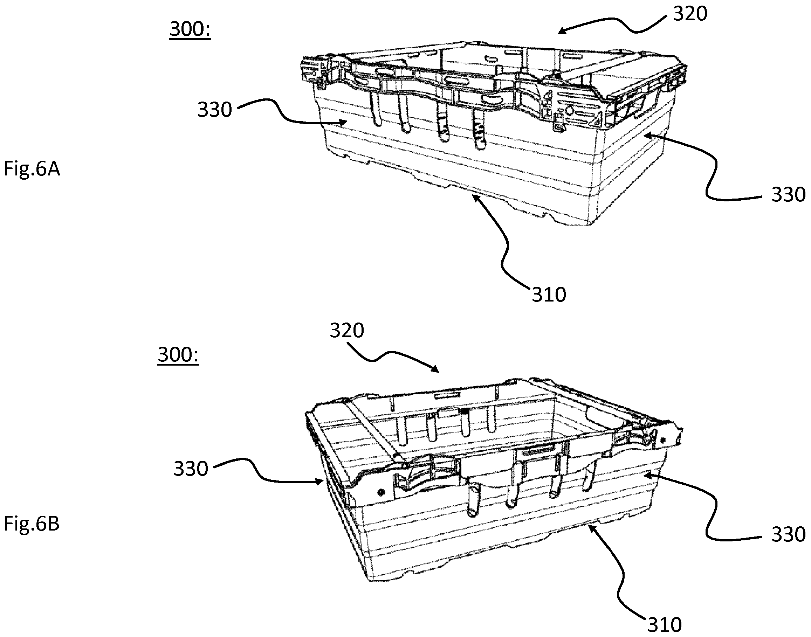

Figure 2B shows a trolley 100 like in Figure 2A, but additionally - in an exploded view - a pair of adapter brackets 200' and 200" are shown. The brackets are capable of securing an associated container 300 to the upper portion 140 of the trolley 100. The container 300 has a substantially rectangular, bottom surface 310 and a plurality of connected sides as shown, cf. Figure 4 and Figure 6 for more details about the container.

Figure 2C is an assembled view similar to Figure 2B. It is seen that the pair of adapter brackets 200, when mounted on opposing sides of the trolley 100 i.e. at the two parallel struts 121 and 122, cooperates so that the trolley 100 supports the bottom surface of the associated container 300 from below. Additionally, the adapter brackets 200 mounted to the trolley engages with the corresponding sides of the container 300 so as to fixate the associated container at least in a direction substantially perpendicular to the parallel struts at said upper portion of the trolley i.e. the left and right direction in Figure 2C.

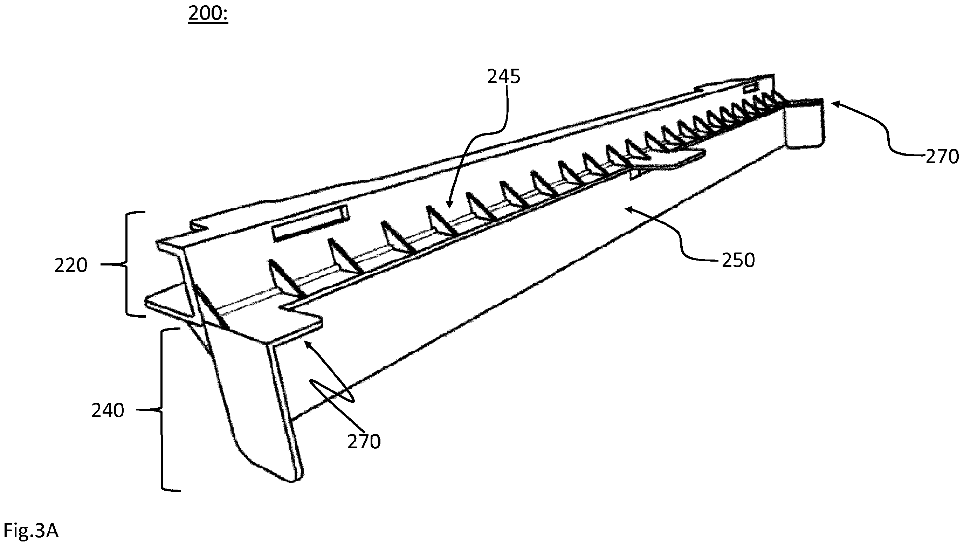

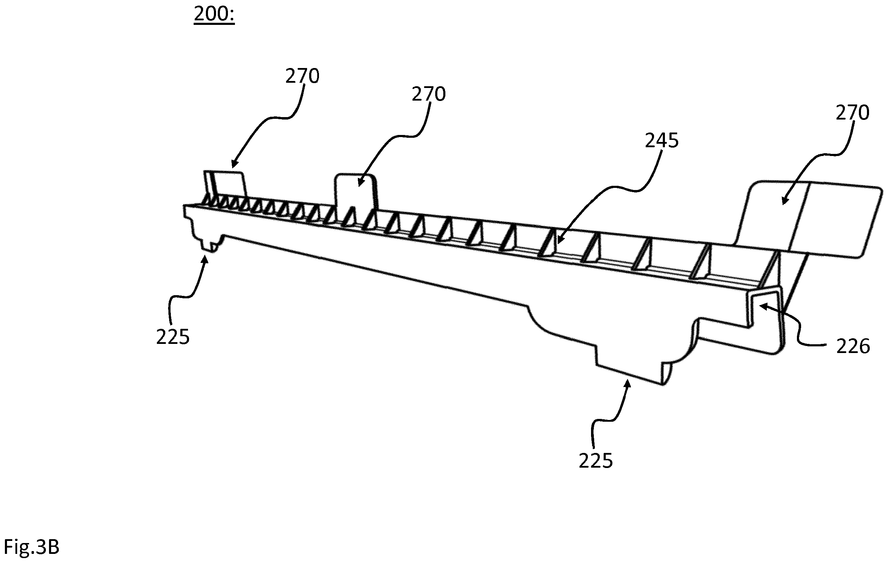

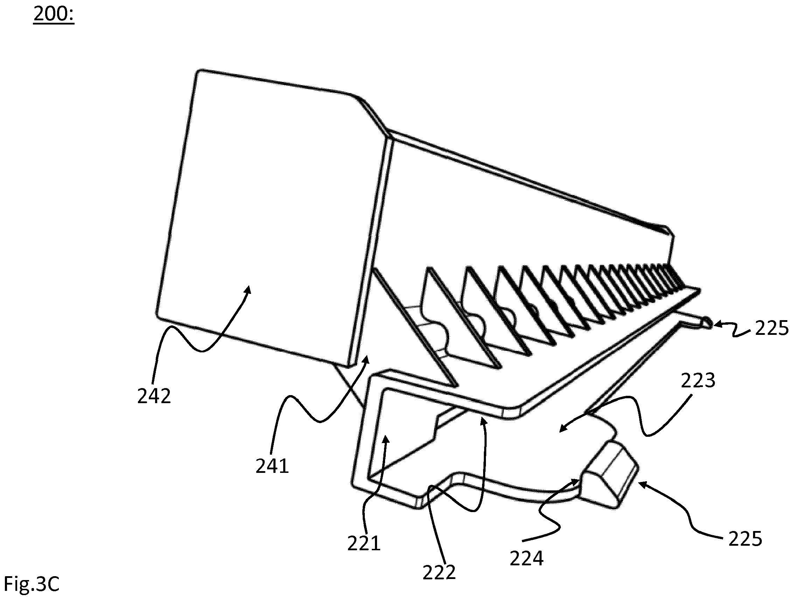

Figure 3 shows three different views of an adapter bracket for securing a container to a trolley according to the present invention.

Figure 3A shows a detailed view of one of the two adapter brackets 200' and 200", referenced 200 below. The two brackets may be identical, but for some embodiments the two brackets may be different, if e.g. the trolley and/or the container have an asymmetry causing a difference in the brackets for securing the container. The brackets comprise two connected portions, a frame mount 220 and a securing base 240. The securing base 240 comprises a first surface 250 for receiving a part of the rectangular bottom surface 310 of the container 300 and a second surface 270 connected to the first surface and oriented upwards therefrom. A possible variation of the adapter brackets 200 could be manufactured, wherein an angle θ' between the first surface 250 and the second surfaces 270 is larger than an angle θ" between the bottom surface 310 and the corresponding sides 330 of the container 300, respectively, so as to guide the container onto the first surface, cf. Figure 4 and Figure 6. Furthermore the adapter brackets 200 have a plurality of strengthening supports 245, e.g. beams or bars, for strengthening purposes, further connecting the frame mount 220 and the securing base 240.

Figure 3B shows another detailed view of one of the two adapter brackets 200 adding a more detailed view of the frame mount 220, compared to Figure 3A and shows the opposite side of the second surface 270, the strengthening support 245, one side of the locking mechanism 225 and the engaging portion 226 of the frame mount for engaging on the two parallel struts 121 and 122 of the upper portion 140 of the trolley 100.

Figure 3C shows a detailed view of one of the two adapter brackets 200 at a third angle, adding a more detailed view of the frame mount 220, compared to Figure 3A and Figure 3B. Figure 3C shows the securing base protruding inwards 241 from the frame mount 220, oriented generally towards a centre of the trolley 100, the frame mount 220 being arranged for engaging on four sides of a parallel strut 121 or 122, at said upper portion 140 of the trolley 100 by a first surface 221, a second surface 222, a third surface and a fourth surface 224 where the fourth surface 224 is a surface on the locking mechanism 225. The first 221, second 222, and third 223 surface of the frame mount may thereby constitute an engaging portion 226. Furthermore, Figure 3C shows a possible variation of the securing base 240, wherein the first surface 250 and the second surface 270 at each end of the securing base 240 is connected to a third surface 242 so as to define at least one corner suitable for securing the associated container 300 in a direction along to the two parallel struts, 121 and 122.

The first surface 250 can be manufactured in a material having a friction surface relative to the bottom surface 310 of the container so as to prevent sliding of said container during transport. Alternatively, the first surface 250 of the securing base can have a textured surface relative to the bottom surface of the container as to prevent sliding of said container during transport.

Figure 4 shows a schematic drawing of the associated container 300 and the two opposing adapter brackets 200' and 200" cooperating so that the pair of first surfaces 250' and 250", left and right side of the trolley respectively, supports the bottom surface 310 of the associated container 300 (dotted line) from below, and the pair of second surfaces 270' and 270" on each side of the trolley 100 engages with the corresponding sides of the container 300 so as to fixate the associated container 300 at least in a direction substantially perpendicular to the parallel struts 121 and 122 at the upper portion 140 of the trolley 100, i.e. in the left and right direction in this view. The width of each first surface 250' and/or 250" could be around 1-15 cm, preferably around 2-10 cm, more preferably around 3-6 cm for sufficient support from below, the optimum width being dependent on the container (and the products to carry therein) and the intended transport.

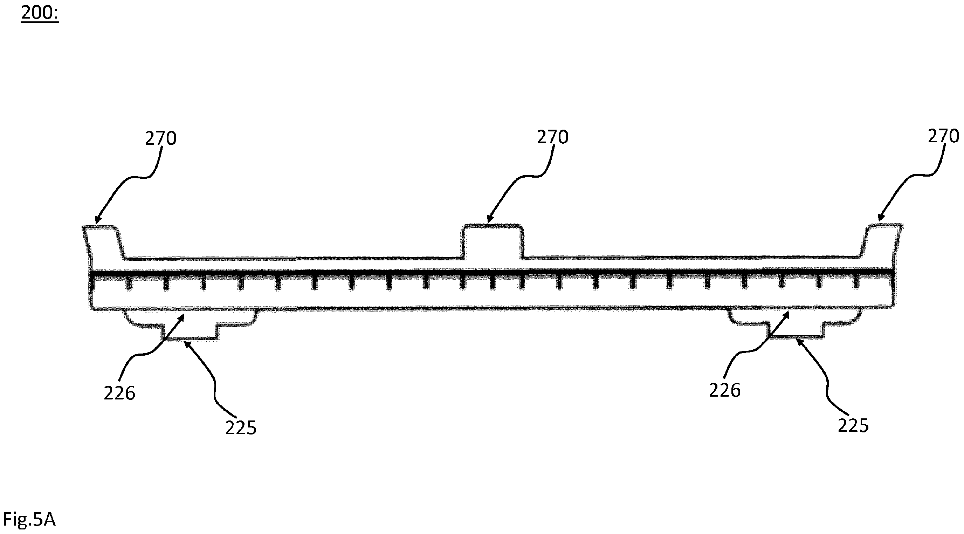

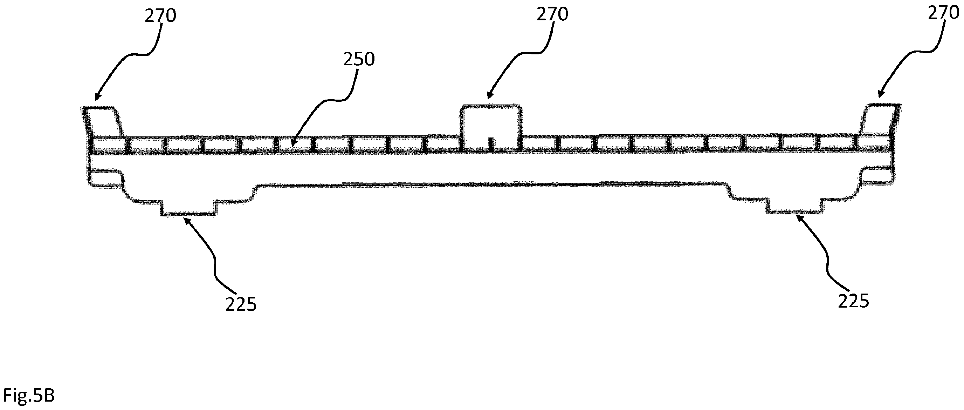

Figure 5 is a front and rear view of an adapter bracket 200 for securing a container to a trolley according to the present invention.

Figure 5A shows a rear view of the adapter bracket 200 with the second surfaces 270 at the top portion of the bracket, the locking mechanism 225 at the bottom portion and the engaging portion 226 of the frame mount for engaging on the two parallel struts 121 and 122 of the upper portion 140 of the trolley 100.

Figure 5B shows a front view of the adapter bracket 200 with the first surface 250 for receiving a part of the rectangular bottom surface 310 of the container 300, the second surfaces 270 at the top portion of the bracket, and the locking mechanism 225 at the bottom portion of the frame mount for engaging on the two parallel struts 121 and 122 of the upper portion 140 of the trolley 100.

Figure 6 shows two views of a container 300 for being securing to a trolley 100 according to the present invention.

Figure 6A shows the a container 300, having four sides 330, attached at an angle, defining a rectangular bottom surface 310 and wherein the sides 330 of the associated container 300 could be arranged in a camber angle, defining a smaller area at the bottom surface 310 of the sides compared to the area of the top portion 320 of the sides.

Figure 6B shows an alternate angle of the container 300 as depicted in Figure 6A, wherein the container has four sides 330, attached at an angle, defining a rectangular bottom surface 310 and wherein the sides 330 of the associated container 300 could be arranged in a camber angle, defining a smaller area at the bottom surface 310 of the sides compared to the area of the top portion 320 of the sides.

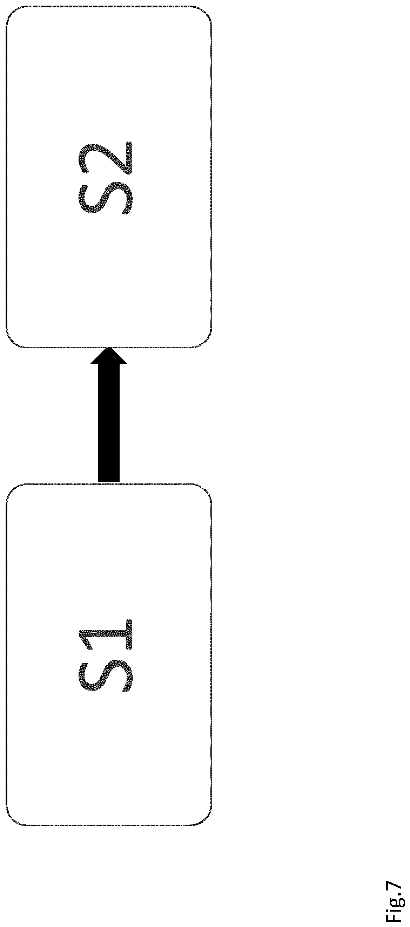

Figure 7 is a flow-chart of a method according to the invention for securing a container to the top of a trolley, preferably for dairy products, the trolley comprising a supporting structure 110 including:
i. a plurality of struts 120 interconnected as to provide a frame with four sides and an upper portion and a lower portion,
ii. the upper portion comprising at least two substantially parallel struts 121, 122, preferably oriented horizontally,
iii. a plurality of casters 105 mounted to said lower portion of the supporting structure, the casters 105 being arranged for rolling displacement of the trolley, and
iv. one, or more, surfaces 130, preferably oriented horizontally, within the supporting structure for storage of said products, cf. Figures 1 and 2,
the method comprising:

**S1** providing a pair of adapter brackets 200, 200', 200" for securing the container to the upper portion of the trolley, the container 300 having a substantially rectangular, bottom surface and a plurality of connected sides, each of the adapter brackets 200', 200" comprising:
i. a frame mount 220 for securing the adapter bracket to a side of said upper portion of the trolley, said frame mount being arranged for engaging on at least two opposite sides of a strut at said upper portion of the trolley, and
ii. a securing base 240 comprising:
   1. a first surface 250 for receiving a part of the rectangular bottom surface of the container, the securing base protruding inwards from said frame mount to a centre of the trolley, and
   2. a second surface 270 connected to said first surface and oriented upwards therefrom, cf. Figure 3, and

**S2** arranging the pair of adapter brackets 200, when mounted on opposing sides of the trolley 100, to cooperate so that
i. the pair of first surfaces 250', 250" on each side of the trolley supports the bottom surface of the associated container from below, and
ii. the pair of second surfaces 270', 270" on each side of the trolley engages with the corresponding sides of the container so as to fixate the associated container at least in a direction substantially perpendicular to the parallel struts at said upper portion of the trolley, cf. Figure 4.

In short, the invention relates to a trolley 100 for distributing dairy products with an upper portion comprising at least two substantially parallel struts and a pair of adapter brackets 200, which have first and second surfaces, for securing a container 300 to the upper portion of the trolley, cf. Figure 1. The pair of adapter brackets is mounted on opposing sides of the trolley and cooperates so that the pair of first surfaces on each side of the trolley supports the bottom surface of the container from below, and the pair of second surfaces on each side of the trolley, engages with the corresponding sides of the container, so as to fixate the container at least in a direction substantially perpendicular to the parallel struts at said upper portion of the trolley. The invention has the ability to secure a container to the top of the dairy trolley, which decreases the need of packaging used for transport.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A trolley (100) for distributing dairy products comprising,
a. a supporting structure (110) including:
i. a plurality of struts (120) interconnected as to provide a frame with four sides and an upper portion (140) and a lower portion (150),
ii. the upper portion comprising at least two substantially parallel struts (121, 122), preferably oriented horizontally,
iii. a plurality of casters (105) mounted to said lower portion of the supporting structure, the casters being arranged for rolling displacement of the trolley, and
iv. one, or more, surfaces(130), preferably oriented horizontally, within the supporting structure for storage of said dairy products,
b. a pair of adapter brackets (200, 200', 200") for securing an associated container to the upper portion of the trolley, the associated container (300) having a substantially rectangular, bottom surface (310) and a plurality of connected sides (330), each of the adapter brackets (200', 200") comprising:
a frame mount (220) for securing the adapter bracket to a side of said upper portion of the trolley, said frame mount being arranged for engaging on at least two opposite sides of a strut at said upper portion of the trolley,
wherein the frame mount comprises a mechanical locking mechanism (225) for further securing the adapter bracket, and
i. a securing base (240) comprising:
1. a first surface (250) for receiving a part of the rectangular bottom surface of the container, the securing base protruding inwards from said frame mount to a centre of the trolley, and
2. a second surface (270) connected to said first surface and oriented upwards therefrom, and
c. wherein the pair of adapter brackets, when mounted on opposing sides of the trolley, cooperates so that
i. the pair of first surfaces (250', 250") on each side of the trolley supports the bottom surface of the associated container from below, and
ii. the pair of second surfaces (270', 270") on each side of the trolley engages with the corresponding sides of the container so as to fixate the associated container at least in a direction substantially perpendicular to the parallel struts at said upper portion of the trolley, and **characterized in that** the first and the second surface at each end of the securing base is connected to a third surface (242) so as to define at least one corner suitable for securing the associated container in a direction along to the two parallel struts.

2. The trolley according to claim 1, wherein the pair of first surfaces (250', 250") on each side of the trolley supports the bottom surface (310) of the associated container from below so that the width of the container bridging between the two parallel struts is smaller than the distance between said struts at the upper portion of the trolley.

3. The trolley according to any of claims 1-2, wherein an angle (θ') between the first and the second surface, and an angle (θ") between the bottom surface and the corresponding sides of the container, respectively, are related so as to enable mechanical interlocking between the second surfaces and the adjacent sides of the container.

4. The trolley according to any of claims 1-2, wherein an angle between the first and the second surface is larger than an angle between the bottom surface and the corresponding sides of the container, respectively, so as to guiding the associated container onto the first surface.

5. The trolley according to any of preceding claims, wherein the first surface is manufactured in a material having a friction surface relative to the bottom surface of the associated container so as to prevent sliding of said container during transport.

6. The trolley according to any of preceding claims, wherein the first surface of the securing base having a textured surface relative to the bottom surface of the associated container as to prevent sliding of said container during transport.

7. The trolley according to claim 1, wherein the mechanical locking mechanism comprises a snap lock mechanism for engaging with said strut in the upper portion of the trolley.

8. The trolley according to any of preceding claims, wherein the sides of the associated container are arranged in a camber angle defining a smaller area at the bottom surface of the sides compared to a top portion of the sides.

9. The trolley according to any of preceding claims, wherein said adapter bracket is manufactured at least partly in a polymer, preferably HDPE.

10. The trolley according to any of preceding claims, wherein said adapter bracket is coated and/or manufactured in with an anti-bacterial surface.

11. The trolley according to any of preceding claims, wherein the pair of adapter brackets secure two, or more, associated containers by supporting each container by the pair of first surfaces from below, and securing each container by the pair of second surfaces.

12. A pair of adapter brackets (200, 200' 200") for securing an associated container (300) to the upper portion (140) of the trolley (100) according to claim 1, preferably for dairy products, the associated container having a rectangular bottom surface (310) and a plurality of connected sides (330), each of the adapter brackets comprising:
i. a frame mount (220) for securing the adapter bracket to a side of said upper portion of the trolley, said frame mount being arranged for engaging on at least two opposite sides of a strut (121, 122) at said upper portion of the trolley, wherein the frame mount comprises a mechanical locking mechanism (225) for further securing the adapter bracket, and
ii. a securing base (240) comprising:
1. a first substantially horizontal surface (250) for receiving a part of the rectangular bottom surface of the container, the securing base protruding inwards from said frame mount and to a centre of the trolley, by which the securing base allow for the bottom surface area of the container to be smaller than the area of the upper portion of the trolley, and
2. a second surface (270) connected to said first surface and oriented upwards therefrom, and
3. wherein the first and the second surface at each end of the securing base is connected to a third surface (242) so as to define at least one corner suitable for securing the associated container in a direction along to the two parallel struts,
b. wherein the pair of adapter brackets, when mounted on opposing sides of the trolley, cooperates so that
i. the pair of first surfaces on each side of the trolley supports the bottom surface of the associated container from below, and
ii. the pair of second surfaces on each side of the trolley engages with the corresponding sides of the container so as to fixate the associated container in a substantially horizontal direction.

13. A method for securing a container to the top of a trolley, preferably for dairy products, the trolley comprising a supporting structure (110) including:
i. a plurality of struts (120) interconnected as to provide a frame with four sides and an upper portion (140) and a lower portion (150),
ii. the upper portion comprising at least two substantially parallel struts (121, 122), preferably oriented horizontally,
iii. a plurality of casters (105) mounted to said lower portion of the supporting structure, the casters being arranged for rolling displacement of the trolley,
iv. one, or more, surfaces(130), preferably oriented horizontally, within the supporting structure for storage of said products,
the method comprising:
- providing a pair of adapter brackets (200, 200', 200") for securing the container to the upper portion of the trolley, the container (300) having a substantially rectangular, bottom surface and a plurality of connected sides, each of the adapter brackets (200', 200") comprising:
i. a frame mount (220) for securing the adapter bracket to a side of said upper portion of the trolley, said frame mount being arranged for engaging on at least two opposite sides of a strut at said upper portion of the trolley,
wherein the frame mount comprises a mechanical locking mechanism (225) for further securing the adapter bracket, and
ii. a securing base (240) comprising:
1. a first surface (250) for receiving a part of the rectangular bottom surface of the container, the securing base protruding inwards from said frame mount to a centre of the trolley, and
2. a second surface (270) connected to said first surface and oriented upwards therefrom, and
3. wherein the first and the second surface at each end of the securing base is connected to a third surface (242) so as to define at least one corner suitable for securing the associated container in a direction along to the two parallel struts, and
- arranging the pair of adapter brackets (200), when mounted on opposing sides of the trolley (100), to cooperate so that
i. the pair of first surfaces (250', 250") on each side of the trolley supports the bottom surface of the associated container from below, and
ii. the pair of second surfaces (270', 270") on each side of the trolley engages with the corresponding sides of the container so as to fixate the associated container at least in a direction substantially perpendicular to the parallel struts at said upper portion of the trolley.

## Patentansprüche

1. Wagen (100) zum Verteilen von Milchprodukten, umfassend
a. eine Tragstruktur (110), beinhaltend:
i. eine Vielzahl von Streben (120), die miteinander verbunden sind, um einen Rahmen mit vier Seiten und einem oberen Abschnitt (140) und einem unteren Abschnitt (150) bereitzustellen,
ii. wobei der obere Abschnitt mindestens zwei im Wesentlichen parallele Streben (121, 122), die vorzugsweise horizontal ausgerichtet sind, umfasst,
iii. eine Vielzahl von Rollen (105), die an dem unteren Abschnitt der Tragstruktur montiert sind, wobei die Rollen zur Rollbewegung des Wagens angeordnet sind, und
iv. eine oder mehrere Oberflächen (130), die vorzugsweise horizontal ausgerichtet sind, innerhalb der Tragstruktur zur Lagerung der Milchprodukte,
b. ein Paar von Adapterklammern (200, 200', 200") zum Befestigen eines zugehörigen Behälters am oberen Abschnitt des Wagens, wobei der zugehörige Behälter (300) eine im Wesentlichen rechteckige Bodenoberfläche (310) und eine Vielzahl von verbundenen Seiten (330) aufweist, wobei jede der Adapterklammern (200', 200") Folgendes umfasst:
eine Rahmenhalterung (220) zum Befestigen der Adapterklammer an einer Seite des oberen Abschnitts des Wagens, wobei die Rahmenhalterung zum Eingriff an mindestens zwei gegenüberliegenden Seiten einer Strebe an dem oberen Abschnitt des Wagens angeordnet ist,
wobei die Rahmenhalterung einen mechanischen Verriegelungsmechanismus (225) zum weiteren Befestigen der Adapterklammer umfasst, und
i. eine Befestigungsbasis (240), umfassend:
1. eine erste Oberfläche (250) zum Aufnehmen eines Teils der rechteckigen Bodenoberfläche des Behälters, wobei die Befestigungsbasis von der Rahmenhalterung nach innen zu einer Mitte des Wagens vorsteht, und
2. eine zweite Oberfläche (270), die mit der ersten Oberfläche verbunden und von dieser nach oben gerichtet ist, und
c. wobei das Paar von Adapterklammern, wenn es auf gegenüberliegenden Seiten des Wagens montiert ist, so zusammenwirkt, dass
i. das Paar erster Oberflächen (250', 250") auf jeder Seite des Wagens die Bodenoberfläche des zugehörigen Behälters von unten trägt, und
ii. das Paar zweiter Oberflächen (270', 270") auf jeder Seite des Wagens mit den entsprechenden Seiten des Behälters in Eingriff steht, um den zugehörigen Behälter zumindest in einer Richtung im Wesentlichen senkrecht zu den parallelen Streben an dem oberen Abschnitt des Wagens zu fixieren, und **dadurch gekennzeichnet, dass** die erste und die zweite Oberfläche an jedem Ende der Befestigungsbasis mit einer dritten Oberfläche (242) verbunden sind, um zumindest eine Ecke zu definieren, die geeignet ist, den zugehörigen Behälter in einer Richtung entlang der zwei parallelen Streben zu befestigen.

2. Wagen nach Anspruch 1, wobei das Paar erster Oberflächen (250', 250") auf jeder Seite des Wagens die Bodenoberfläche (310) des zugehörigen Behälters von unten trägt, sodass die Breite des Behälters, die zwischen den zwei parallelen Streben liegt, kleiner als der Abstand zwischen den Streben am oberen Abschnitt des Wagens ist.

3. Wagen nach einem der Ansprüche 1-2, wobei ein Winkel (θ') zwischen der ersten und der zweiten Oberfläche bzw. ein Winkel (θ") zwischen der Bodenoberfläche und den entsprechenden Seiten des Behälters so in Beziehung stehen, dass eine mechanische Verriegelung zwischen den zweiten Oberflächen und den benachbarten Seiten des Behälters ermöglicht wird.

4. Wagen nach einem der Ansprüche 1-2, wobei ein Winkel zwischen der ersten und der zweiten Oberfläche größer als ein Winkel zwischen der Bodenoberfläche und den entsprechenden Seiten des Behälters ist, um den zugehörigen Behälter auf die erste Oberfläche zu führen.

5. Wagen nach einem der vorhergehenden Ansprüche, wobei die erste Oberfläche aus einem Material hergestellt ist, das eine Reibungsoberfläche relativ zu der Bodenoberfläche des zugehörigen Behälters aufweist, um ein Gleiten des Behälters während des Transports zu verhindern.

6. Wagen nach einem der vorhergehenden Ansprüche, wobei die erste Oberfläche der Befestigungsbasis eine strukturierte Oberfläche relativ zu der Bodenoberfläche des zugehörigen Behälters aufweist, um ein Gleiten des Behälters während des Transports zu verhindern.

7. Wagen nach Anspruch 1, wobei der mechanische Verriegelungsmechanismus einen Schnappverriegelungsmechanismus zum Eingriff mit der Strebe in dem oberen Abschnitt des Wagens umfasst.

8. Wagen nach einem der vorhergehenden Ansprüche, wobei die Seiten des zugehörigen Behälters in einem Sturzwinkel angeordnet sind, der eine kleinere Fläche an der Bodenoberfläche der Seiten im Vergleich zu einem oberen Abschnitt der Seiten definiert.

9. Wagen nach einem der vorhergehenden Ansprüche, wobei die Adapterklammer zumindest teilweise in einem Polymer, vorzugsweise HDPE, hergestellt ist.

10. Wagen nach einem der vorhergehenden Ansprüche, wobei die Adapterklammer mit einer antibakteriellen Oberfläche beschichtet und/oder hergestellt ist.

11. Wagen nach einem der vorhergehenden Ansprüche, wobei das Paar von Adapterklammern zwei oder mehr zugehörige Behälter befestigt, indem jeder Behälter durch das Paar erster Oberflächen von unten getragen wird und jeder Behälter durch das Paar zweiter Oberflächen befestigt wird.

12. Paar von Adapterklammern (200, 200', 200") zum Befestigen eines zugehörigen Behälters (300) am oberen Abschnitt (140) des Wagens (100) nach Anspruch 1, vorzugsweise für Milchprodukte, wobei der zugehörige Behälter eine rechteckige Bodenoberfläche (310) und eine Vielzahl von verbundenen Seiten (330) aufweist, wobei jede der Adapterklammern Folgendes umfasst:
i. eine Rahmenhalterung (220) zum Befestigen der Adapterklammer an einer Seite des oberen Abschnitts des Wagens, wobei die Rahmenhalterung zum Eingriff an mindestens zwei gegenüberliegenden Seiten einer Strebe (121, 122) an dem oberen Abschnitt des Wagens angeordnet ist, wobei die Rahmenhalterung einen mechanischen Verriegelungsmechanismus (225) zum weiteren Befestigen der Adapterklammer umfasst, und
ii. eine Befestigungsbasis (240), umfassend:
1. eine erste, im Wesentlichen horizontale Oberfläche (250) zum Aufnehmen eines Teils der rechteckigen Bodenoberfläche des Behälters, wobei die Befestigungsbasis von der Rahmenhalterung nach innen und zu einer Mitte des Wagens vorsteht, wodurch die Befestigungsbasis es ermöglicht, dass die Fläche der Bodenoberfläche des Behälters kleiner als die Fläche des oberen Abschnitts des Wagens ist, und
2. eine zweite Oberfläche (270), die mit der ersten Oberfläche verbunden und von dieser nach oben gerichtet ist, und
3. wobei die erste und die zweite Oberfläche an jedem Ende der Befestigungsbasis mit einer dritten Oberfläche (242) verbunden sind, um zumindest eine Ecke zu definieren, die geeignet ist, den zugehörigen Behälter in einer Richtung entlang der zwei parallelen Streben zu befestigen,
b. wobei das Paar von Adapterklammern, wenn es auf gegenüberliegenden Seiten des Wagens montiert ist, so zusammenwirkt, dass
i. das Paar erster Oberflächen auf jeder Seite des Wagens die Bodenoberfläche des zugehörigen Behälters von unten trägt, und
ii. das Paar zweiter Oberflächen auf jeder Seite des Wagens mit den entsprechenden Seiten des Behälters in Eingriff steht, um den zugehörigen Behälter in einer im Wesentlichen horizontalen Richtung zu fixieren.

13. Verfahren zum Befestigen eines Behälters an der Oberseite eines Wagens, vorzugsweise für Milchprodukte, wobei der Wagen eine Tragstruktur (110) umfasst, die Folgendes beinhaltet:
i. eine Vielzahl von Streben (120), die miteinander verbunden sind, um einen Rahmen mit vier Seiten und einem oberen Abschnitt (140) und einem unteren Abschnitt (150) bereitzustellen,
ii. wobei der obere Abschnitt mindestens zwei im Wesentlichen parallele Streben (121, 122), die vorzugsweise horizontal ausgerichtet sind, umfasst,
iii. eine Vielzahl von Rollen (105), die an dem unteren Abschnitt der Tragstruktur montiert sind, wobei die Rollen zur Rollbewegung des Wagens angeordnet sind,
iv. eine oder mehrere Oberflächen (130), die vorzugsweise horizontal ausgerichtet sind, innerhalb der Tragstruktur zur Lagerung der Produkte,
wobei das Verfahren Folgendes umfasst:
- Bereitstellen eines Paars von Adapterklammern (200, 200', 200") zum Befestigen des Behälters am oberen Abschnitt des Wagens, wobei der Behälter (300) eine im Wesentlichen rechteckige Bodenoberfläche und eine Vielzahl von verbundenen Seiten aufweist, wobei jede der Adapterklammern (200', 200") Folgendes umfasst:
i. eine Rahmenhalterung (220) zum Befestigen der Adapterklammer an einer Seite des oberen Abschnitts des Wagens, wobei die Rahmenhalterung zum Eingriff an mindestens zwei gegenüberliegenden Seiten einer Strebe an dem oberen Abschnitt des Wagens angeordnet ist, wobei die Rahmenhalterung einen mechanischen Verriegelungsmechanismus (225) zum weiteren Befestigen der Adapterklammer umfasst,
und
ii. eine Befestigungsbasis (240), umfassend:
1. eine erste Oberfläche (250) zum Aufnehmen eines Teils der rechteckigen Bodenoberfläche des Behälters, wobei die Befestigungsbasis von der Rahmenhalterung nach innen zu einer Mitte des Wagens vorsteht, und
2. eine zweite Oberfläche (270), die mit der ersten Oberfläche verbunden und von dieser nach oben gerichtet ist, und
3. wobei die erste und die zweite Oberfläche an jedem Ende der Befestigungsbasis mit einer dritten Oberfläche (242) verbunden sind, um zumindest eine Ecke zu definieren, die geeignet ist, den zugehörigen Behälter in einer Richtung entlang der zwei parallelen Streben zu befestigen, und
- Anordnen des Paars von Adapterklammern (200), wenn es auf gegenüberliegenden Seiten des Wagens (100) montiert ist, um zusammenzuwirken, sodass
i. das Paar erster Oberflächen (250', 250") auf jeder Seite des Wagens die Bodenoberfläche des zugehörigen Behälters von unten trägt, und
ii. das Paar zweiter Oberflächen (270', 270") auf jeder Seite des Wagens mit den entsprechenden Seiten des Behälters in Eingriff steht, um den zugehörigen Behälter zumindest in einer Richtung im Wesentlichen senkrecht zu den parallelen Streben an dem oberen Abschnitt des Wagens zu fixieren.

## Revendications

1. Chariot (100) destiné à la distribution de produits laitiers comprenant,
a. une structure de support (110) comprenant :
i. une pluralité d'entretoises (120) interconnectées de manière à fournir un cadre à quatre côtés et une partie supérieure (140) et une partie inférieure (150),
ii. la partie supérieure comprenant au moins deux entretoises sensiblement parallèles (121, 122), de préférence orientées horizontalement,
iii. une pluralité de roulettes (105) montées sur ladite partie inférieure de la structure de support, les roulettes étant agencées en vue du déplacement par roulement du chariot, et
iv. une, ou plusieurs, surfaces (130), de préférence orientées horizontalement, à l'intérieur de la structure de support destinées au stockage desdits produits laitiers,
b. une paire de consoles adaptatrices (200, 200', 200") destinées à fixer un conteneur associé à la partie supérieure du chariot, le conteneur associé (300) possédant une surface de fond sensiblement rectangulaire (310) et une pluralité de côtés raccordés (330), chacune des consoles adaptatrices (200', 200") comprenant :
un support de cadre (220) destiné à fixer la console adaptatrice sur un côté de ladite partie supérieure du chariot, ledit support de cadre étant agencé pour se mettre en prise sur au moins deux côtés opposés d'une entretoise au niveau de ladite partie supérieure du chariot,
ledit support de cadre comprenant un mécanisme de verrouillage mécanique (225) destiné à fixer davantage la console adaptatrice, et
i. une base de fixation (240) comprenant :
1. une première surface (250) destinée à recevoir une partie de la surface de fond rectangulaire du conteneur, la base de fixation faisant saillie vers l'intérieur à partir dudit support de cadre vers un centre du chariot, et
2. une seconde surface (270) raccordée à ladite première surface et orientée vers le haut à partir de celle-ci, et
c. ladite paire de consoles adaptatrices, lorsqu'elle est montée sur des côtés opposés du chariot, coopérant afin que
i. la paire de premières surfaces (250', 250") de chaque côté du chariot supporte la surface de fond du conteneur associé par en dessous, et
ii. la paire de secondes surfaces (270', 270") de chaque côté du chariot se mette en prise avec les côtés correspondants du conteneur de façon à fixer le conteneur associé au moins dans une direction sensiblement perpendiculaire aux entretoises parallèles au niveau de ladite partie supérieure du chariot, et **caractérisé en ce que** la première et la deuxième surface au niveau de chaque extrémité de la base de fixation sont raccordées à une troisième surface (242) de façon à définir au moins un coin adéquat destiné à fixer le conteneur associé dans une direction le long des deux entretoises parallèles.

2. Chariot selon la revendication 1, ladite paire de premières surfaces (250', 250") de chaque côté du chariot supportant la surface de fond (310) du conteneur associé par le bas afin que la largeur du conteneur faisant le pont entre les deux entretoises parallèles soit inférieure à la distance entre lesdites entretoises au niveau de la partie supérieure du chariot.

3. Chariot selon l'une quelconque des revendications 1 à 2, un angle (θ') entre la première et la seconde surface, et un angle (θ") entre la surface de fond et les côtés correspondants du conteneur, respectivement, étant liés de façon à permettre un verrouillage mécanique entre les deuxièmes surfaces et les côtés adjacents du conteneur.

4. Chariot selon l'une quelconque des revendications 1 à 2, un angle entre la première et la seconde surface étant supérieur à un angle entre la surface de fond et les côtés correspondants du conteneur, respectivement, de façon à guider le conteneur associé sur la première surface.

5. Chariot selon l'une quelconque des revendications précédentes, ladite première surface étant fabriquée dans un matériau possédant une surface de frottement par rapport à la surface de fond du conteneur associé de façon à empêcher le glissement dudit conteneur durant le transport.

6. Chariot selon l'une quelconque des revendications précédentes, ladite première surface de la base de fixation possédant une surface texturée par rapport à la surface de fond du conteneur associé de manière à empêcher le glissement dudit conteneur durant le transport.

7. Chariot selon la revendication 1, ledit mécanisme de verrouillage mécanique comprenant un mécanisme de verrouillage à encliquetage destiné à se mettre en prise avec ladite entretoise dans la partie supérieure du chariot.

8. Chariot selon l'une quelconque des revendications précédentes, lesdits côtés du conteneur associé étant agencés selon un angle de cambrure définissant une zone plus petite au niveau de la surface de fond des côtés par rapport à une partie haute des côtés.

9. Chariot selon l'une quelconque des revendications précédentes, ladite console adaptatrice étant fabriquée au moins en partie dans un polymère, de préférence HDPE.

10. Chariot selon l'une quelconque des revendications précédentes, ladite console adaptatrice étant revêtue et/ou fabriquée avec une surface antibactérienne.

11. Chariot selon l'une quelconque des revendications précédentes, ladite paire de consoles adaptatrices fixant deux conteneurs associés, ou plus, en supportant chaque conteneur par la paire de premières surfaces à partir du dessous, et en fixant chaque conteneur par la paire de secondes surfaces.

12. Paire de consoles adaptatrices (200, 200', 200") destinées à fixer un conteneur associé (300) à la partie supérieure (140) du chariot (100) selon la revendication 1, de préférence pour des produits laitiers, le conteneur associé possédant un surface de fond rectangulaire (310) et une pluralité de côtés raccordés (330), chacune des consoles adaptatrices comprenant :
i. un support de cadre (220) destiné à fixer la console adaptatrice sur un côté de ladite partie supérieure du chariot, ledit support de cadre étant agencé pour se mettre en prise sur au moins deux côtés opposés d'une entretoise (121, 122) au niveau de ladite partie supérieure du chariot, ledit support de cadre comprenant un mécanisme de verrouillage mécanique (225) destiné à fixer davantage la console adaptatrice, et
ii. une base de fixation (240) comprenant :
1. une première surface sensiblement horizontale (250) destinée à recevoir une partie de la surface de fond rectangulaire du conteneur, la base de fixation faisant saillie vers l'intérieur à partir dudit support de cadre et vers un centre du chariot, par laquelle la base de fixation permet à la surface de fond du conteneur d'être plus petite que la surface de la partie supérieure du chariot, et
2. une seconde surface (270) raccordée à ladite première surface et orientée vers le haut à partir de celle-ci, et
3. ladite première et ladite deuxième surface au niveau de chaque extrémité de la base de fixation étant raccordées à une troisième surface (242) de façon à définir au moins un coin adéquat pour fixer le conteneur associé dans une direction le long des deux entretoises parallèles,
b. ladite paire de consoles adaptatrices, lorsqu'elle est montée sur des côtés opposés du chariot, coopérant afin que
i. la paire de premières surfaces de chaque côté du chariot supporte la surface de fond du conteneur associé par en dessous, et
ii. la paire de deuxièmes surfaces de chaque côté du chariot se mettre en prise avec les côtés correspondants du conteneur de façon à fixer le conteneur associé dans une direction sensiblement horizontale.

13. Procédé permettant de fixer un conteneur au sommet d'un chariot, de préférence pour des produits laitiers, le chariot comprenant une structure de support (110) comprenant :
i. une pluralité d'entretoises (120) interconnectées de manière à fournir un cadre à quatre côtés et une partie supérieure (140) et une partie inférieure (150),
ii. la partie supérieure comprenant au moins deux entretoises sensiblement parallèles (121, 122), de préférence orientées horizontalement,
iii. une pluralité de roulettes (105) montées sur ladite partie inférieure de la structure de support, les roulettes étant agencées en vue du déplacement par roulement du chariot,
iv. une, ou plusieurs, surfaces (130), de préférence orientées horizontalement, à l'intérieur de la structure de support destinées au stockage desdits produits,
le procédé comprenant :
- la fourniture d'une paire de consoles adaptatrices (200, 200', 200") destinée à fixer le conteneur à la partie supérieure du chariot, le conteneur (300) possédant une surface de fond sensiblement rectangulaire et une pluralité de côtés raccordés, chacune des consoles adaptatrices (200', 200") comprenant :
i. un support de cadre (220) destiné à fixer la console adaptatrice sur un côté de ladite partie supérieure du chariot, ledit support de cadre étant agencé pour se mettre en prise sur au moins deux côtés opposés d'une entretoise au niveau de ladite partie supérieure du chariot,
ledit support de cadre comprenant un mécanisme de verrouillage mécanique
(225) destiné à fixer davantage la console adaptatrice, et
ii. une base de fixation (240) comprenant :
1. une première surface (250) destinée à recevoir une partie de la surface de fond rectangulaire du conteneur, la base de fixation faisant saillie vers l'intérieur à partir dudit support de cadre vers un centre du chariot, et
2. une seconde surface (270) raccordée à ladite première surface et orientée vers le haut à partir de celle-ci, et
3. ladite première et ladite deuxième surface au niveau de chaque extrémité de la base de fixation étant raccordées à une troisième surface (242) de façon à définir au moins un coin adéquat pour fixer le conteneur associé dans une direction le long des deux entretoises parallèles, et
- l'agencement de la paire de consoles adaptatrices (200), lorsqu'elle est montée sur des côtés opposés du chariot (100), pour coopérer afin que
i. la paire de premières surfaces (250', 250") de chaque côté du chariot supporte la surface de fond du conteneur associé par en dessous, et
ii. la paire de secondes surfaces (270', 270") de chaque côté du chariot se mette en prise avec les côtés correspondants du conteneur de façon à fixer le conteneur associé au moins dans une direction sensiblement perpendiculaire aux entretoises parallèles au niveau de ladite partie supérieure du chariot.
